# FASCICULE DE BREVET EUROPEEN

(11) **EP 3 927 982 B1**
(45) Date de publication et mention de la délivrance du brevet: **07.06.2023**
(21) Numéro de dépôt: 20704870.3
(22) Date de dépôt: 13.02.2020
(51) Int. Cl.: F16B 31/02

(54) **DISPOSITIF DE VISUALISATION DE PERTE DE TENSION DANS UN ASSEMBLAGE**
VORRICHTUNG ZUR BETRACHTUNG DES SPANNUNGSVERLUSTS IN EINER BAUGRUPPE
DEVICE FOR VIEWING TENSION LOSS IN AN ASSEMBLY

(30) Priorité: 19.02.2019 FR 1901637
(43) Date de publication de la demande: 29.12.2021
(73) Titulaire: Utille, Lionel, 74210 Faverges-Seythenex (FR)
(72) Inventeur: UTILLE, Lionel, 74210 Faverges-Syethenex (FR)
(74) Mandataire: Cabinet Laurent & Charras
(86) Numéro de dépôt international: PCT/EP2020/053798
(87) Numéro de publication internationale: WO 2020/169450

(56) Documents cités:
- WO-A1-2007/118941
- DE-A1- 4 428 721
- FR-A1- 2 906 854
- US-A- 3 306 154
- US-A- 3 474 701
- US-A- 4 889 457

## Description

La présente invention concerne un dispositif de visualisation de perte de tension dans un assemblage.

On trouve dans de très multiples produits, des pièces assemblées par des boulons, c'est à dire, une vis et un écrou ou par des écrous montés sur des goujons.

Dans certaines applications, il est très important d'assurer un serrage déterminé de l'écrou. C'est par exemple le cas d'assemblage des éléments d'une grue, ou de la fixation d'un pylône sur le sol, d'une structure d'un pont roulant, d'un pylône de remontée mécanique, d'une nacelle ou autre, comme par exemple un manège tel qu'un grand huit.

Afin de permettre un serrage déterminé des écrous d'assemblages, les constructeurs proposent des clés dynamométriques ou des visseuses dont le serrage est taré et déterminé. Toutefois l'utilisation de tels moyens ne permet pas de procéder à une vérification visuelle de la perte de tension dans une structure, ce qui est un handicap sérieux pour des structures assemblées comprenant parfois des centaines voire des milliers d'écrous. De plus ces moyens n'empêchent pas un desserrage intempestif qui n'est pas visible, et qui présente un inconvénient sérieux et dangereux.

Il existe des dispositifs permettant de visualiser le serrage d'écrou qui à notre connaissance ne sont pas utilisés, pour des raisons d'inefficacité et/ou d'usures prématurées. Notamment, des dispositifs comme celui divulgué par le brevet FR 2 906854, utilisant un élastomère qui forme une fois écrasé, une saillie périphérique dépassant de la rondelle une fois le serrage effectué. L'utilisation de l'élastomère dans ces dispositifs ne permet pas de garantir un fonctionnement sur du long terme ou dans certaines conditions extrêmes. D'autres dispositifs sans élastomère existent, mais ne proposent pas de visualisation claire du desserrage puisque les éléments visible ne font pas de saillie périphérique et ne se rétracte pas à l'intérieur de la rondelle. Aussi, dans d'autres dispositifs, l'élément de visualisation ne reprend pas sa forme ou sa place originelle, ne permettant pas de constater le serrage effectué mais pas un desserrage.

La présente invention a pour objet de résoudre les inconvénients cités précédemment et propose un dispositif de visualisation particulièrement simple peu coûteux et fiable.

Selon la revendication 1, il est proposé le dispositif de visualisation de perte de tension dans un assemblage de l'invention, destiné à l'assemblage de deux éléments d'une structure, par coopération avec une tige filetée l'assemblage étant réalisé, par exemple, par un boulon constitué par une vis, un écrou, et composé, de deux rondelles non déformables comportant une face interne, une face externe, une paroi périphérique externe et une paroi périphérique interne délimitant un orifice central et un anneau de visualisation déformable diamétralement pris en sandwich entre les deux rondelles non déformables. L'épaisseur d'au moins une des rondelles ou des deux rondelles de l'invention diminue du centre de la ou les rondelles vers son ou leurs extrémité(s) périphérique(s).

L'invention se caractérise aussi en ce qu'au moins une des rondelles non déformable comprend sur sa face interne une saillie centrale dont la face interne est destinée, après mise en serrage, à venir en appui contre la face interne d'une autre rondelle. Cependant, pour certains besoins, les deux rondelles non déformables, comprennent sur leur face interne une saillie centrale destinée, après mise en serrage, à venir en appui.

Aussi, une des rondelles de l'invention comporte un diamètre supérieur au diamètre de l'autre rondelle afin de laisser apparaître la face interne d'une des rondelles avantageusement revêtue d'une couleur.

L'anneau déformable de l'invention est réalisé en métal. Il peut donc être réalisé par un ressort torique du type hélicoïdal, dont les deux extrémités du fil sont solidaires. Il peut aussi être réalisé dans un matériau plein et coupé dans sa section pour permettre une déformation diamétrale.

Aussi, la forme de la section de l'anneau peut être un quadrilatère trapèze, ou tout profil trapézoïdal dont un des côtés parallèles est orienté vers l'extérieur périphérique des rondelles.

Le dispositif de visualisation selon l'invention comporte des billes de roulement disposées sur les surfaces de l'anneau et destinées à être en contact glissant avec les faces internes des rondelles non déformables, facilitant ainsi le mouvement dudit anneau.

Pour qu'une poussée axiale soit assurée, forçant l'écartement en cas de desserrage du dispositif, il comporte un élément ressort disposé entre les rondelles non déformables. Et pour permettre le positionnement et le maintien de l'élément ressort, au moins une des rondelles est munie d'une gorge circulaire sur sa face interne, proche de l'orifice central de ladite rondelle.

D'autres caractéristiques et avantages de l'invention se dégageront de la description qui va suivre en regard des dessins annexés qui ne sont donnés qu'à titre d'exemples non limitatifs.

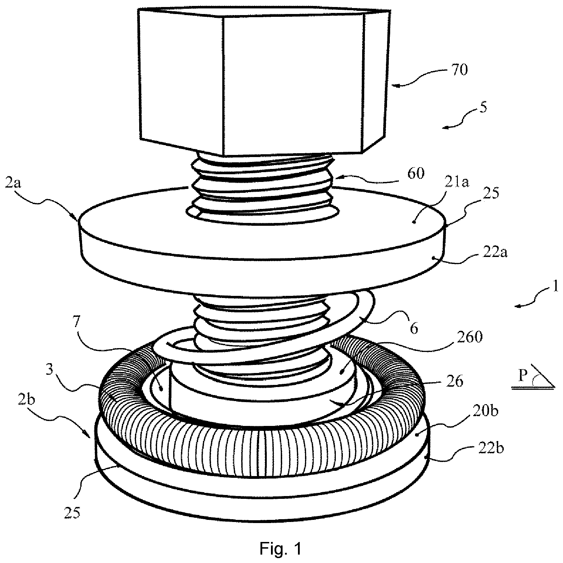

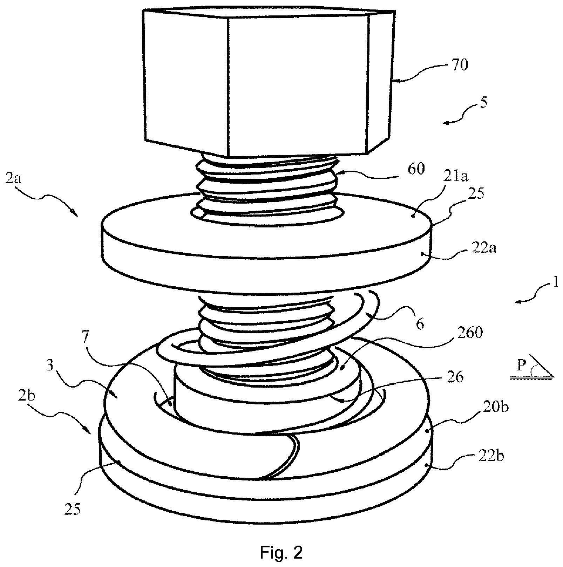

Les figures 1 et 2 illustrent le dispositif de l'invention en perspective selon deux modes de réalisation différents.

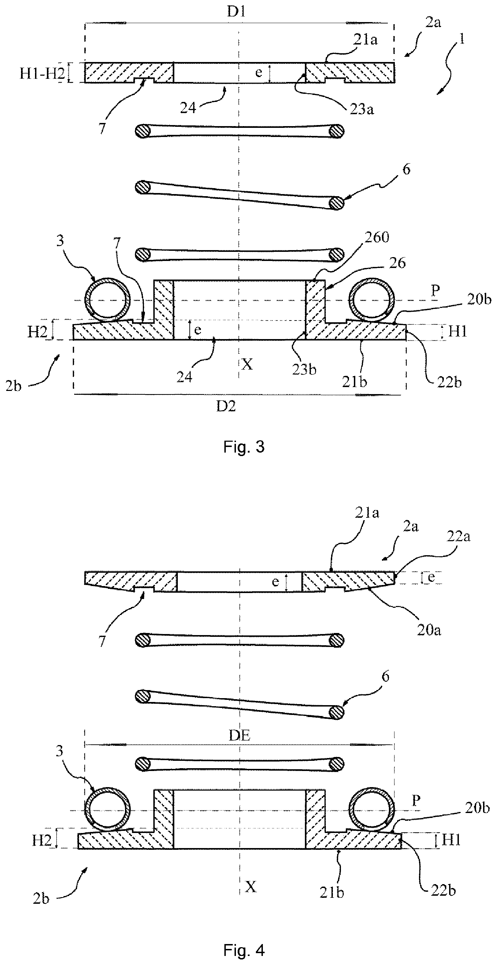

Les figures 3 et 4 illustrent en coupe, le dispositif de l'invention en cours de montage, selon deux modes de réalisation différents.

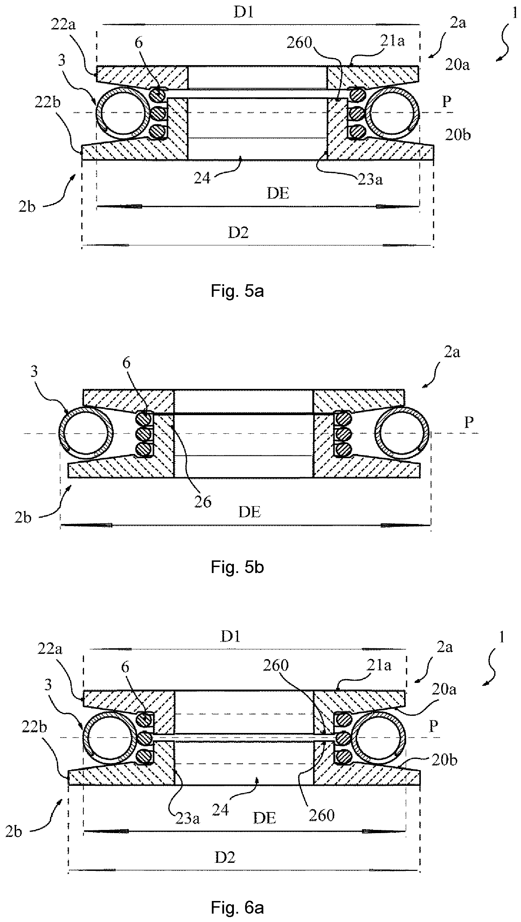

La figure 5a illustre en coupe le dispositif selon le mode préféré de l'invention, montrant le fait que le serrage n'est pas réalisé.
La figure 5b illustre en coupe le dispositif de la figure 5a, une fois le serrage réalisé.
La figure 6a illustre en coupe le dispositif selon un second mode de réalisation de l'invention, montrant le fait que le serrage n'est pas effectué.

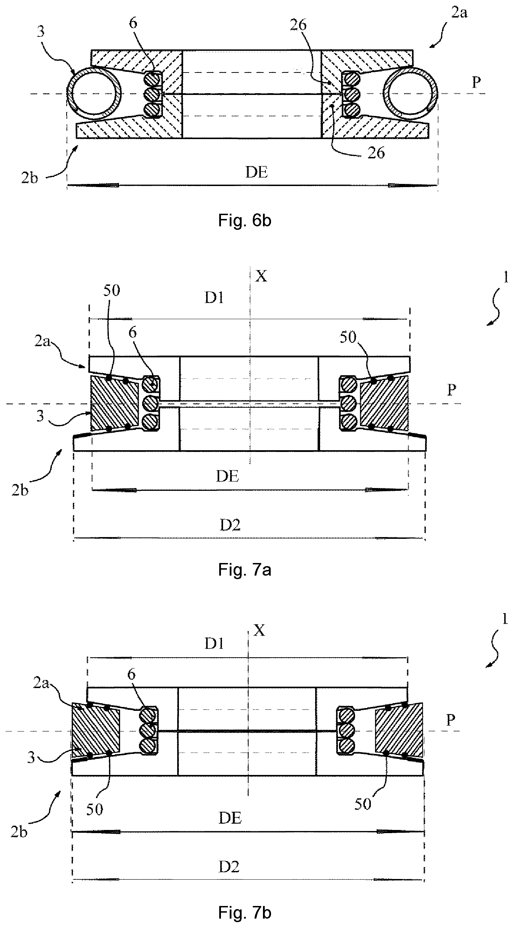

La figure 6b illustre en coupe le dispositif de la figure 6a, une fois le serrage effectué.
La figure 7a illustre en coupe le dispositif selon un autre mode de réalisation, montrant le fait que le serrage n'est pas effectué.
La figure 7b illustre en coupe le dispositif de la figure 7a, une fois le serrage effectué.

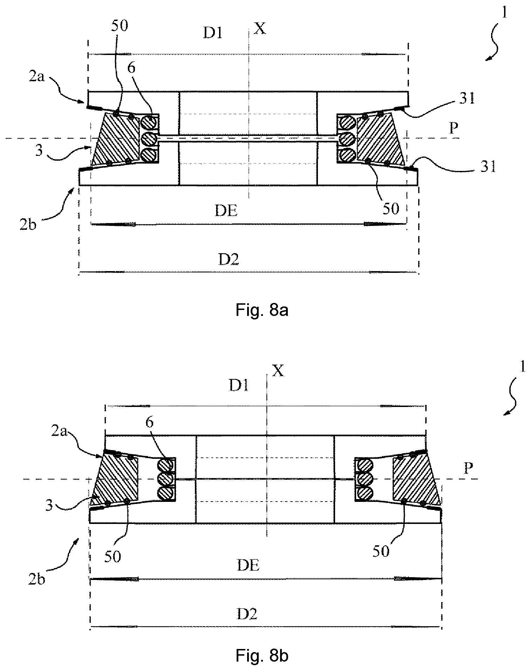

La figure 8a illustre en coupe le dispositif selon encore un autre mode de réalisation, montrant le fait que le serrage n'est pas effectué.
La figure 8b illustre en coupe le dispositif de la figure 8a, une fois le serrage effectué.

Le dispositif de visualisation (1) est destiné à être utilisé pour l'assemblage de deux éléments faisant partie d'une structure, l'assemblage étant réalisé, par exemple, par un boulon (5) constitué par une vis (60) et un écrou (70).

La structure peut être, par exemple, une grue et l'assemblage concerne, par exemple, deux profilés, mais la structure peut être aussi un pylône fixé au sol grâce à des goujons scellés dans un bloc de béton. Bien entendu l'invention peut concerner tous types de structures ou d'assemblages sans pour autant sortir du cadre de l'invention.

Selon l'invention, le dispositif de visualisation (1) constitue une rondelle de visualisation et d'assemblage, destinée à être mise en place sous l'écrou (7), comprenant un élément déformable élastiquement (3) disposé entre deux éléments non déformables (2a, 2b) et qui est mis en mouvement et déformé lors du serrage dudit écrou.

Les éléments non déformables (2a, 2b) sont constitués par au moins une rondelle réalisée dans un matériau non déformable.

Ainsi, le mode préféré du dispositif de l'invention est composé de deux rondelles non déformables (2a, 2b), chacune formant un disque comportant une face interne (20a, 20b), une face externe (21a, 21b), une paroi périphérique externe (22a, 22b) et une paroi périphérique interne (23a, 23b) délimitant un orifice central (24) et un anneau de visualisation déformable diamétralement (3) pris en sandwich entre les deux rondelles non déformables (2a, 2b).

Donc, selon le mode préféré de l'invention, au moins une des rondelles (2a, 2b) est de section en forme générale de trapèze rectangle dont la partie inclinée est positionnée vers l'intérieur du dispositif.

Selon d'autres variantes, la section est de la forme d'un triangle, ou un trapèze isocèle.

Selon une caractéristique principale de l'invention, l'épaisseur (e) d'au moins une des rondelles (2a, 2b) diminue du centre (24) de la rondelle vers son extrémité périphérique (25). Ainsi, là face interne d'au moins une des rondelles forme une pente orientée vers l'extérieur. Autrement dit, la hauteur (H2) de la paroi périphérique interne (23a, 23b) est plus grande que la hauteur (H1) de la paroi périphérique externe (22a, 22b). Ladite pente orientée vers l'extérieur, réalisée par la face interne (20a, 20b) d'au moins une rondelle (2a, 2b), pousse l'anneau (3) et le déforme diamétralement pour le faire apparaître en périphérie extérieure (22a, 22b) d'au moins une rondelle (2a, 2b), lors du serrage.

Donc selon le mode préféré de l'invention, l'épaisseur (e) de chaque rondelle diminue du centre de la rondelle (24) vers son extrémité périphérique externe (25) et l'espace entre les deux rondelles s'élargit vers l'extérieur périphérique (EXT) du dispositif (1).

Selon le mode préféré de l'invention, les rondelles (2a, 2b) comportent chacune un diamètre (D1, D2) différent.

Les diamètres (D1, D2) des rondelles (2a, 2b) étant différents, la rondelle supérieure (2a) étant avantageusement la plus petite, et de diamètre (D1) inférieur au diamètre (D2) de la rondelle inferieure (2b), permet un accès visuel sur au moins une partie de la surface interne (20b) de la rondelle inferieure (2b).

Donc l'anneau de visualisation (3) est pris en sandwich entre les deux rondelles (2a, 2b), plus particulièrement dans un espace ouvert en périphérie extérieure. L'espace diminuant lors du serrage, l'anneau est poussé vers l'extérieur.

Donc, lors du serrage, l'anneau (3) dépasse au moins en partie de la périphérie extérieure de la rondelle supérieure (2a), permettant d'un simple coup d'oeil de constater si la face interne (20b) de la rondelle inferieure (2b) est visible.

Aussi, pour faciliter la vision du desserrage, et selon le mode de réalisation préféré de l'invention, la face interne (20a, 20b) est colorée sur sa partie proche de la périphérie extérieure de la rondelle.

Donc, le dispositif de visualisation (1) est constitué par un anneau déformable (3) extensible et rétractable diamétralement permettant de réduire ou augmenter son diamètre extérieur (DE), réalisé en matériau élastique. L'élément déformable (3) élastiquement et la face interne (20a, 20b) d'une des rondelles (2a, 2b) réalisent donc un moyen de visualisation de perte de tension dans un assemblage.

Selon une caractéristique de l'invention, au moins une des rondelles non déformable (2a, 2b) comprend sur sa face interne une saillie centrale (26) dont la face interne (260) est destinée après mise en serrage à venir en appui contre la face interne (20a) de l'autre rondelle (2a, 2b).

Selon une autre variante de réalisation, les deux rondelles (2a, 2b) comportent une saillie centrale destinée à être en contact l'une avec l'autre.

La/les saillie(s) réalise(nt) la butée mécanique du dispositif, sur laquelle/lesquelles porte l'effort de serrage.

Selon l'invention, l'anneau déformable (3) de visualisation est réalisé dans un matériau résistant à l'usure, aux UV et autres contraintes. Ainsi, selon le mode préféré de l'invention, l'anneau déformable (3) est réalisé dans un matériau métallique. L'anneau déformable est donc avantageusement réalisé en métal. Selon d'autres modes de réalisations l'anneau est réalisé dans des matériaux composites tels que du carbone, ou de la résine.

Selon l'invention, l'anneau déformable (3) est donc extensible et rétractable diamétralement, autrement dit, l'anneau est résistant à l'écrasement et se déforme uniquement diamétralement. L'anneau comportant un plan diamétral (P) et un axe central (X), sensiblement perpendiculaire l'un à l'autre, se déforme uniquement dans le plan diamétral (P).

Selon l'invention l'anneau déformable est réalisé par un ressort torique du type hélicoïdal, dont les deux extrémités du fil sont solidaires. Et dont les spires sont disposées sensiblement perpendiculaires au plan diamétral (P) de l'anneau (3)

Ledit ressort est de section cylindrique.

Cependant, et sans sortir du champ de l'invention, la section du ressort comporte un méplat avantageusement situé au niveau du diamètre extérieur de l'anneau.

Lors du serrage, la pression exercée sur lui pousse les spires du ressort à s'écarter les unes des autres réalisant un ressort plus grand en diamètre (DE) et dépassant ainsi de la périphérie (25) d'au moins une des rondelles (2a, 2b).

Selon une variante de réalisation, l'anneau déformable (3) est réalisé dans un matériau plein et coupé dans sa section pour permettre une déformation diamétrale.

Et selon une autre variante de réalisation, l'anneau déformable (3) est réalisé dans un profil tubulaire creux et coupé dans sa section.

Selon d'autres variantes de réalisations, la section de l'anneau (3) forme un quadrilatère trapèze ou un triangle.

L'anneau (3) comporte un profil de section trapézoïdal dont un des côtés parallèles est orienté vers l'extérieur périphérique (25, EXT) des rondelles (2a, 2b).

L'anneau (3) comporte des billes (50) de roulement disposées sur les surfaces destinées à être en contact glissant avec au moins une des faces internes (20a, 20b) des rondelles non déformables (2a, 2b), facilitant ainsi son mouvement. Et selon le mode préféré de l'invention, les billes de roulement sont en contact avec les deux faces internes des rondelles.

On a compris que lors du serrage de l'écrou (7) l'anneau déformable forme une saillie périphérique constituant un indicateur de bon serrage.

On a compris aussi, que si l'écrou vient à se desserrer, l'anneau déformable se rétracte et la partie en saillie périphérique disparaît au moins en partie.

Ainsi, par un simple coup d'oeil sur les boulons de la structure, l'utilisateur pourra constater si l'un ou l'autre de ces derniers sont tout ou en partie desserrés.

Selon le mode préféré de l'invention, pour qu'une poussée axiale sur l'écrou soit assurée, forçant l'écartement en cas de desserrage, le dispositif comporte un élément ressort (6) disposé entre les deux rondelles non déformables (2a, 2b).

Ledit élément ressort (6) est avantageusement un ressort hélicoïdal de poussée.

Bien entendu les dimensions et les caractéristiques élastiques du matériau seront choisies en fonction du résultat à obtenir.

Selon une autre caractéristique de l'invention, au moins une des deux rondelles (2a, 2b) est munie d'une gorge circulaire (7), proche de l'orifice central (24) de ladite rondelle (2a, 2b). Cette gorge a pour fonction de positionner et de retenir le ressort de poussée (6). En effet, au moins une des extrémités dudit ressort est positionnée dans cette gorge (7). Selon le mode préféré de l'invention, les deux rondelles (2a, 2b) sont munies d'une gorge circulaire (7) de positionnement du ressort (6).

De plus les deux rondelles (2a, 2b) sont solidaires en rotation grâce à un clipsage, collage ou un soudage, réalisé par ultrasons ou vibrations, voire par une liaison de type mécanique.

Notons aussi que l'anneau (3) de l'invention pourra être coloré, comme par exemple en jaune, rouge, orange, bleu ou phosphorescent ou rétro-réfléchissant pour améliorer sa visibilité.

## Revendications

1. Dispositif de visualisation (1) de perte de tension dans une structure, par coopération avec une tige filetée, étant réalisé, par exemple, par un boulon (5) constitué par une vis (60), un écrou (70), et composé, de deux rondelles non déformables (2a, 2b) comportant une face interne (20a, 20b), une face externe (21a, 21b), une paroi périphérique externe (22a, 22b) et une paroi périphérique interne (23a, 23b) délimitant un orifice central (24) et un anneau de visualisation (3) déformable diamétralement pris en sandwich entre les deux rondelles non déformables (2a, 2b), **caractérisé en ce que** l'anneau comportant un plan diamétral (P), un axe centrale (X), sensiblement perpendiculaire l'un à l'autre, est résistant à l'écrasement, et se déforme uniquement dans le plan diamétral (P) et l'épaisseur (e) d'au moins une des rondelles diminue du centre de la rondelle vers son extrémité périphérique (25), l'épaisseur la plus faible étant donc située vers l'extrémité périphérique d'au moins une rondelle (2a, 2b).

2. Dispositif de visualisation (1) selon l'une quelconque des revendications précédentes, **caractérisé en ce qu'**une des rondelles comporte un diamètre (D1) supérieur au diamètre (D2) de l'autre rondelle.

3. Dispositif de visualisation (1) selon la revendication 1, **caractérisé en ce que** au moins une des rondelles non déformable (2a,2b) comprend sur sa face interne (20a, 20b) une saillie centrale (26) dont la face interne (260) est destinée, après mise en serrage, à venir en appui contre la face interne (20a, 20b) d'une autre rondelle (20a, 20b).

4. Dispositif de visualisation (1) selon l'une quelconque des revendications précédentes, **caractérisé en ce que** les deux rondelles non déformables (2a, 2b), comprennent sur leur face interne (20a, 20b) une saillie centrale (26) dont leur face interne (260) sont destinées, après mise en serrage, à venir en appui l'une contre l'autre.

5. Dispositif de visualisation (1) selon l'une quelconque des revendications précédentes, **caractérisé en ce que** l'épaisseur (e) des deux rondelles (22a, 22b) diminue du centre de chaque rondelle vers leur extrémité périphérique (25), l'épaisseur la plus faible étant donc située vers l'extrémité périphérique de chaque rondelle

6. Dispositif de visualisation (1) selon l'une quelconque des revendications précédentes, **caractérisé en ce que** la face interne (20a, 20b) d'une des rondelles est revêtue d'une couleur (31).

7. Dispositif de visualisation (1) selon l'une quelconque des revendications précédentes, **caractérisé en ce que** l'anneau déformable (3) est réalisé par un ressort torique du type hélicoïdal, dont les deux extrémités du fil sont solidaires.

8. Dispositif de visualisation (1) selon l'une quelconque des revendications précédentes, **caractérisé en ce que** l'anneau déformable (3) est réalisé dans un matériau plein et coupé dans sa section pour permettre une déformation diamétrale.

9. Dispositif de visualisation (1) selon l'une quelconque des revendications précédentes, **caractérisé en ce que** la section de l'anneau (3) forme un quadrilatère trapèze.

10. Dispositif de visualisation (1) selon l'une quelconque des revendications précédentes, **caractérisé en ce que** l'anneau (3) comporte un profil de section trapézoïdale dont un des côtés parallèles (4a) est orienté vers l'extérieur périphérique (25) des rondelles.

11. Dispositif de visualisation (1) selon les revendications 1 à 6 et 8 à 10 **caractérisé en ce que** l'anneau (3) comporte des billes de roulement (50) disposées sur les surfaces destinées à être en contact glissant avec les faces internes (20a, 20b) des rondelles non déformables (2a, 2b) facilitant ainsi son mouvement.

12. Dispositif de visualisation (1) selon l'une quelconque des revendications précédentes, **caractérisé en ce qu'**il comporte un élément ressort (6) disposé entre les rondelles non déformables (2a, 2b) pour qu'une poussée axiale soit assurée, forçant leur écartement en cas de desserrage du dispositif.

13. Dispositif de visualisation (1) selon l'une quelconque des revendications précédentes, **caractérisé en ce que** l'anneau déformable (3) est réalisé en métal.

## Patentansprüche

1. Vorrichtung zur Betrachtung (1) des Spannungsverlusts in einer Struktur durch Zusammenwirken mit einer Gewindestange, die beispielsweise von einem Bolzen (5) realisiert ist, der von einer Schraube (60), einer Mutter (70) gebildet ist, und die aus zwei nicht verformbaren Scheiben (2a, 2b) zusammengesetzt ist, die eine Innenseite (20a, 20b), eine Außenseite (21a, 21b), eine periphere Außenwand (22a, 22b) und eine periphere Innenwand (23a, 23b) aufweisen, die eine zentrale Öffnung (24) begrenzt und einem diametral verformbaren Betrachtungsring (3), der zwischen den zwei nicht verformbaren Scheiben (2a, 2b) sandwichartig eingeschlossen ist, **dadurch gekennzeichnet, dass** der Ring, der eine diametrale Ebene (P), eine zentrale Achse (X), die etwa senkrecht zueinander sind, aufweist, gegenüber dem Quetschen widerstandsfähig ist und sich nur in der diametralen Ebene (P) verformt und die Dicke (e) von mindestens einer der Scheiben vom Zentrum der Scheibe zu ihrem peripheren Ende (25) abnimmt, wobei sich die geringste Dicke dann in Richtung des peripheren Endes von mindestens einer Scheibe (2a, 2b) befindet.

2. Betrachtungsvorrichtung (1) nach einem der vorangehenden Ansprüche, **dadurch gekennzeichnet, dass** eine der Scheiben einen Durchmesser (D1) aufweist, der größer als der Durchmesser (D2) der anderen Scheibe ist.

3. Betrachtungsvorrichtung (1) nach Anspruch 1, **dadurch gekennzeichnet, dass** mindestens eine der nicht verformbaren Scheiben (2a, 2b) auf ihrer Innenseite (20a, 20b) einen zentralen Vorsprung (26) umfasst, dessen Innenseite (260) nach dem Spannen bestimmt ist, sich auf der Innenseite (20a, 20b) einer anderen Scheibe (20a, 20b) abzustützen.

4. Betrachtungsvorrichtung (1) nach einem der vorangehenden Ansprüche, **dadurch gekennzeichnet, dass** die zwei nicht verformbaren Scheiben (2a, 2b) auf ihrer Innenseite (20a, 20b) einen zentralen Vorsprung (26) umfassen, dessen Innenseite (260) nach dem Spannen bestimmt sind, sich aufeinander abzustützen.

5. Betrachtungsvorrichtung (1) nach einem der vorangehenden Ansprüche, **dadurch gekennzeichnet**, das die Dicke (e) der zwei Scheiben (22a, 22b) vom Zentrum jeder Scheibe zu ihrem peripheren Ende (25) abnimmt, wobei sich die geringste Dicke dann in Richtung des peripheren Endes jeder Scheibe befindet.

6. Betrachtungsvorrichtung (1) nach einem der vorangehenden Ansprüche, **dadurch gekennzeichnet, dass** die Innenseite (20a, 20b) einer der Scheiben mit einer Farbe (31) beschichtet ist.

7. Betrachtungsvorrichtung (1) nach einem der vorangehenden Ansprüche, **dadurch gekennzeichnet, dass** der verformbare Ring (3) aus einer torischen Feder vom Schraubentyp hergestellt ist, deren zwei Enden des Drahts fest verbunden sind.

8. Betrachtungsvorrichtung (1) nach einem der vorangehenden Ansprüche, **dadurch gekennzeichnet, dass** der verformbare Ring (3) aus einem querschnittsgeschnittenen Vollmaterial hergestellt ist, um eine diametrale Verformung zu gestatten.

9. Betrachtungsvorrichtung (1) nach einem der vorangehenden Ansprüche, **dadurch gekennzeichnet, dass** der Querschnitt des Rings (3) ein trapezförmiges Viereck bildet.

10. Betrachtungsvorrichtung (1) nach einem der vorangehenden Ansprüche, **dadurch gekennzeichnet, dass** der Ring (3) ein trapezförmiges Querschnittsprofil aufweist, dessen eine parallele Seite (4a) zum peripheren Äußeren (25) der Scheiben zeigt.

11. Betrachtungsvorrichtung (1) nach den Ansprüchen 1 bis 6 und 8 bis 10, **dadurch gekennzeichnet, dass** der Ring (3) Lagerkugeln (50) aufweist, die auf den Oberflächen angeordnet sind, die bestimmt sind, mit den Innenflächen (20a, 20b) der nicht verformbaren Scheiben (2a, 2b) im Gleitkontakt zu sein, wodurch seine Bewegung erleichtert wird.

12. Betrachtungsvorrichtung (1) nach einem der vorangehenden Ansprüche, **dadurch gekennzeichnet, dass** sie ein Federelement (6) aufweist, das zwischen den nicht verformbaren Scheiben (2a, 2b) angeordnet ist, damit ein axialer Schub sichergestellt ist, der ihre Beabstandung beim Lösen der Vorrichtung erzwingt.

13. Betrachtungsvorrichtung (1) nach einem der vorangehenden Ansprüche, **dadurch gekennzeichnet, dass** der verformbare Ring (3) aus Metall hergestellt ist.

## Claims

1. A device (1) for viewing tension loss in a structure, by cooperation with a threaded rod, being implemented, for example, by a bolt (5) consisting of a screw (60), a nut (70), and composed of two non-deformable washers (2a, 2b) including an inner face (20a, 20b), an outer face (21a, 21b), an outer peripheral wall (22a, 22b) and an inner peripheral wall (23a, 23b) delimiting a central orifice (24) and a diametrically deformable viewing ring(3) sandwiched between the two non-deformable washers (2a, 2b), **characterised in that** the ring including a diametral plane (P), a central axis (X), substantially perpendicular to each other, is resistant to crushing, and deforms only in the diametral plane (P), and the thickness (e) of at least one of the washers decreases from the centre of the washer towards its peripheral end (25), the smallest thickness being therefore located towards the peripheral end of at least one washer (2a, 2b) .

2. The viewing device (1) according to any one of the preceding claims, **characterised in that** one of the washers includes a diameter (D1) larger than the diameter (D2) of the other washer.

3. The viewing device (1) according to claim 1, **characterised in that** at least one of the non-deformable washers (2a, 2b) comprises on its inner face (20a, 20b) a central projection (26) the inner face (260) of which is intended, after tightening, to bear against the inner face (20a, 20b) of another washer (20a, 20b).

4. The viewing device (1) according to any one of the preceding claims, **characterised in that** the two non-deformable washers (2a, 2b) comprise, on their inner face (20a, 20b), a central projection (26) the inner faces (260) of which are intended, after tightening, to bear against each other.

5. The viewing device (1) according to any one of the preceding claims, **characterised in that** the thickness (e) of the two washers (22a, 22b) decreases from the centre of each washer towards their peripheral end (25), the smallest thickness being therefore located towards the peripheral end of each washer.

6. The viewing device (1) according to any one of the preceding claims, **characterised in that** the inner face (20a, 20b) of one of the washers is coated with a colour (31) .

7. The viewing device (1) according to any one of the preceding claims, **characterised in that** the deformable ring (3) is made in the form of a helical-type toroidal spring, the two ends of the wires of which are secured together.

8. The viewing device (1) according to any one of the preceding claims, **characterised in that** the deformable ring (3) is made of a solid material and cut in its section to enable a diametral deformation.

9. The viewing device (1) according to any one of the preceding claims, **characterised in that** the section of the ring (3) forms a trapezoidal quadrilateral.

10. The viewing device (1) according to any one of the preceding claims, **characterised in that** the ring (3) includes a profile with a trapezoidal section one of the parallel sides (4a) of which is oriented towards the peripheral exterior (25) of the washers.

11. The viewing device (1) according to claims 1 to 6 and 8 to 10, **characterised in that** the ring (3) includes rolling balls (50) disposed over the surfaces intended to be in sliding contact with the inner faces (20a, 20b) of the non-deformable washers (2a, 2b) thus facilitating its movement.

12. The viewing device (1) according to any one of the preceding claims, **characterised in that** it includes a spring element (6) disposed between the non-deformable washers (2a, 2b) so that an axial thrust is ensured, forcing separation thereof in the event of loosening of the device.

13. The viewing device (1) according to any one of the preceding claims, **characterised in that** the deformable ring (3) is made of metal.
